# EUROPEAN PATENT APPLICATION

(11) **EP 4 716 101 A1**
(43) Date of publication of application: **25.03.2026**
(21) Application number: 24823686.1
(22) Date of filing: 12.06.2024
(51) Int. Cl.: H04B 1/401, H04B 7/0413, H04B 7/06, H04B 17/10, H04W 88/06

(54) **ELECTRONIC DEVICE FOR CHANGING TRANSMISSION ANTENNA AND METHOD FOR OPERATING SAME**

(30) Priority: 12.06.2023 KR 20230075161; 25.07.2023 KR 20230096747
(71) Applicant: Samsung Electronics Co., Ltd., Suwon-si, Gyeonggi-do 16677 (KR)
(72) Inventor: AHN, Seungok, Suwon-si Gyeonggi-do 16677 (KR); NAM, In, Suwon-si Gyeonggi-do 16677 (KR); SHIN, Jongwoo, Suwon-si Gyeonggi-do 16677 (KR); LEE, Hanyeop, Suwon-si Gyeonggi-do 16677 (KR)
(74) Representative: Gulde & Partner
(86) International application number: PCT/KR2024/008025
(87) International publication number: WO 2024/258168

(57) **Abstract**

According to an embodiment, an electronic device may comprise at least one communication processor and at least one short-range communication circuit. The at least one communication processor may be configured to control a first RF signal for cellular communication to be provided to a first antenna included in a first antenna group. The at least one short-range communication circuit may be configured to control a second RF signal for non-cellular communication to be provided to at least one of a second antenna and a third antenna included in a second antenna group The at least one communication processor may be configured to identify a first event associated with cellular communication while the non-cellular communication is performed through the second antenna and the third antenna on the basis of a MIMO mode. The at least one communication processor may be configured to identify the transmission power of the first RF signal on the basis of identifying that the band corresponding to the first event is a first band associated with a band corresponding to the non-cellular communication. The at least one communication processor may be configured to switch the operation mode of the at least one short-range communication circuit to an SISO mode by controlling the at least one short-range communication circuit to provide the second RF signal to the third antenna having a longer distance from the first antenna than the second antenna on the basis of identifying that the transmission power of the first RF signal is equal to/larger than a threshold value. Other embodiments are also possible.

## Description

### [Technical Field]

An embodiment of the disclosure relates to an electronic device changing a transmission antenna and a method for operating the same.

### [Background Art]

Wireless communication systems are evolving to support a higher data rate to meet the demand for steadily increasing radio data traffic. Electronic devices may transmit and receive signals having 4G frequencies, 5G sub6 frequencies, and 3 GHz to 5 GHz frequencies to enhance network access and data transmission rates.

A user equipment may support Bluetooth-based communication and/or Wi-Fi (e.g., IEEE 802.11 series, etc.) as well as cellular data communication. A user equipment may simultaneously transmit at least a plurality of signals among an uplink signal for cellular data communication, an uplink signal for Bluetooth communication, and an uplink signal for Wi-Fi communication.

The above-described information may be provided as related art for the purpose of helping understanding of the disclosure. No claim or determination is made as to whether any of the foregoing is applicable as background art in relation to the disclosure.

### [Detailed Description of the Invention]

### [Technical Solution]

According to an embodiment, an electronic device may include at least one communication processor and at least one short-range communication circuit. The at least one communication processor may be configured to control a first RF signal for cellular communication to be provided to a first antenna included in a first antenna group. The at least one short-range communication circuit may be configured to control a second RF signal for non-cellular communication to be provided to at least one antenna out of a second antenna or a third antenna included in a second antenna group. The at least one communication processor may be configured to identify a first event associated with cellular communication while the non-cellular communication is performed through the second antenna and the third antenna based on a MIMO mode. The at least one communication processor may be configured to identify transmission power of the first RF signal based on identifying that a band corresponding to the first event is a first band associated with a band corresponding to the non-cellular communication. The at least one communication processor may be configured to switch an operation mode of the at least one short-range communication circuit to a SISO mode by controlling the at least one short-range communication circuit such that the second RF signal is provided to the third antenna having a distance from the first antenna longer than the second antenna, based on identifying that the transmission power of the first RF signal is equal to or greater than a threshold.

According to an embodiment, a method of operating an electronic device may include an operation of identifying a first event associated with cellular communication through a first antenna included in a first antenna group while the non-cellular communication is performed through a second antenna and a third antenna included in a second antenna group based on a MIMO mode. The method of operating the electronic device may include an operation of identifying transmission power of a first RF signal for cellular communication based on identifying that a band corresponding to the first event is a first band associated with a band corresponding to the non-cellular communication. The method of operating the electronic device may include an operation of switching an operation mode of at least one short-range communication circuit of the electronic device to a SISO mode by controlling the at least one short-range communication circuit such that a second RF signal for the non-cellular communication is provided to the third antenna having a distance from the first antenna longer than the second antenna, based on identifying that the transmission power of the first RF signal is equal to or greater than a threshold.

According to an embodiment, in a storage medium storing at least one instruction readable by a computer, the at least one instruction may cause the electronic device to perform at least one operation when executed by at least one processor of the electronic device. The at least one operation may include an operation of identifying a first event associated with cellular communication through a first antenna included in a first antenna group while the non-cellular communication is performed through a second antenna and a third antenna included in a second antenna group based on a MIMO mode. The at least one operation may include an operation of identifying transmission power of a first RF signal for cellular communication based on identifying that a band corresponding to the first event is a first band associated with a band corresponding to the non-cellular communication. The at least one operation may include an operation of switching an operation mode of at least one short-range communication circuit of the electronic device to a SISO mode by controlling the at least one short-range communication circuit such that a second RF signal for the non-cellular communication is provided to the third antenna having a distance from the first antenna longer than the second antenna, based on identifying that the transmission power of the first RF signal is equal to or greater than a threshold.

According to an embodiment, an electronic device may include at least one communication processor and at least one short-range communication circuit. The at least one communication processor may be configured to control a first RF signal for cellular communication to be provided to a first antenna included in a first antenna group. The at least one short-range communication circuit may be configured to control a second RF signal for non-cellular communication to be provided to at least one antenna out of a second antenna or a third antenna included in a second antenna group. The at least one communication processor may be configured to identify a second event associated with non-cellular communication while performing the cellular communication through the first antenna. The at least one communication processor may be configured to identify transmission power of the first RF signal based on identifying that a band corresponding to the cellular communication is a first band associated with a band corresponding to the non-cellular communication. The at least one communication processor may be configured to set an operation mode of the at least one short-range communication circuit to a SISO mode by controlling the at least one short-range communication circuit such that the second RF signal is provided to the third antenna having a distance from the first antenna longer than the second antenna, based on identifying that the transmission power of the first RF signal is equal to or greater than a threshold.

According to an embodiment, a method of operating an electronic device may include an operation of identifying a second event associated with non-cellular communication while performing cellular communication through a first antenna included in a first antenna group. The method of operating the electronic device may include an operation of identifying transmission power of a first RF signal for cellular communication based on identifying that a band corresponding to the cellular communication is a first band associated with a band corresponding to the non-cellular communication. The method of operating the electronic device may include an operation of setting an operation mode of at least one short-range communication circuit of the electronic device to a SISO mode by controlling the at least one short-range communication circuit such that a second RF signal for the non-cellular communication is provided to the third antenna having a distance from the first antenna longer than the second antenna, based on identifying that the transmission power of the first RF signal is equal to or greater than a threshold.

According to an embodiment, in a storage medium storing at least one instruction readable by a computer, the at least one instruction may cause the electronic device to perform at least one operation when executed by at least one processor of the electronic device. The at least one operation may include an operation of identifying a second event associated with non-cellular communication while performing cellular communication through a first antenna included in a first antenna group. The at least one operation may include an operation of identifying transmission power of a first RF signal for cellular communication based on identifying that a band corresponding to the cellular communication is a first band associated with a band corresponding to the non-cellular communication. The at least one operation may include an operation of setting an operation mode of at least one short-range communication circuit of the electronic device to a SISO mode by controlling the at least one short-range communication circuit such that a second RF signal for the non-cellular communication is provided to the third antenna having a distance from the first antenna longer than the second antenna, based on identifying that the transmission power of the first RF signal is equal to or greater than a threshold.

### [Brief Description of Drawings]

FIG. 1 is a block diagram illustrating an electronic device in a network environment according to an embodiment;
FIG. 2A is a block diagram illustrating an electronic device for supporting legacy network communication and 5G network communication according to an embodiment.
FIG. 2B is a block diagram illustrating an electronic device for supporting legacy network communication and 5G network communication according to an embodiment.
FIG. 3 is a block diagram illustrating an example electronic device according to an embodiment.
FIG. 4 is a view illustrating an exemplary electronic device according to time according to an embodiment.
FIG. 5 is a flowchart illustrating an operation method of an electronic device according to an embodiment.
FIG. 6 illustrates a flowchart for describing an operation method of an electronic device according to an embodiment.
FIG. 7 is a view illustrating transmission antenna change of an electronic device according to an embodiment.
FIG. 8A is a view illustrating example operations of an electronic device according to an embodiment.
FIG. 8B is a view illustrating example operations of an electronic device according to an embodiment.
FIG. 9 is a flowchart illustrating an operation method of an electronic device according to an embodiment.
FIG. 10 illustrates a flowchart for describing an operation method of an electronic device according to an embodiment.
FIG. 11A is a flowchart illustrating a method of operating an electronic device according to an embodiment.
FIG. 11B is a flowchart illustrating an operation method of an electronic device according to an embodiment.

### [Mode for Carrying out the Invention]

Hereinafter, embodiments of the disclosure are described in detail with reference to the drawings so that those skilled in the art to which the disclosure pertains may easily practice the disclosure. However, the disclosure may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions.

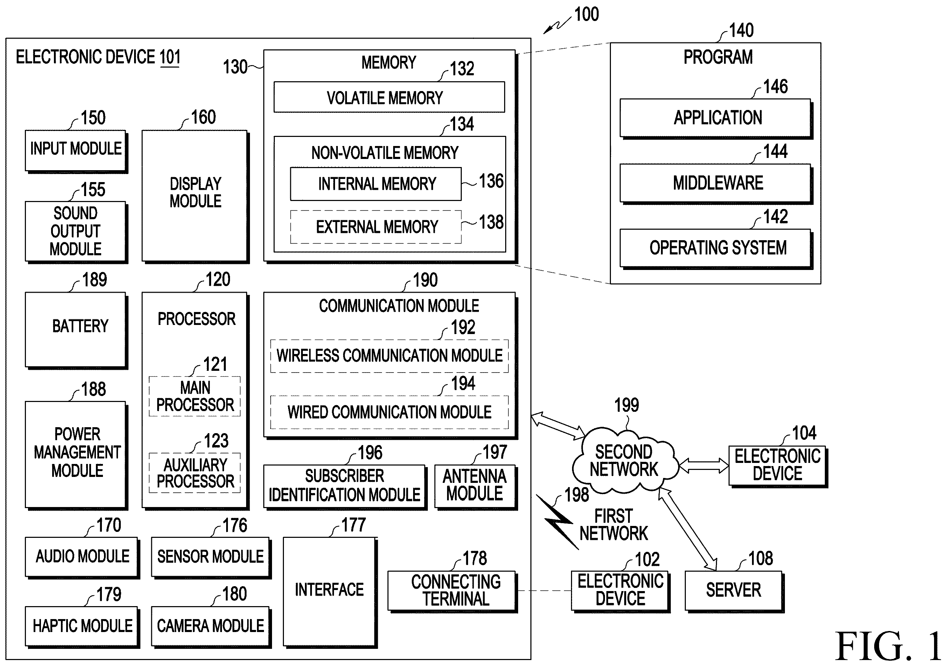

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., the program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operation state (e.g., power or temperature) of the electronic device 101 or an external environmental state (e.g., the user's state), and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wiredly) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

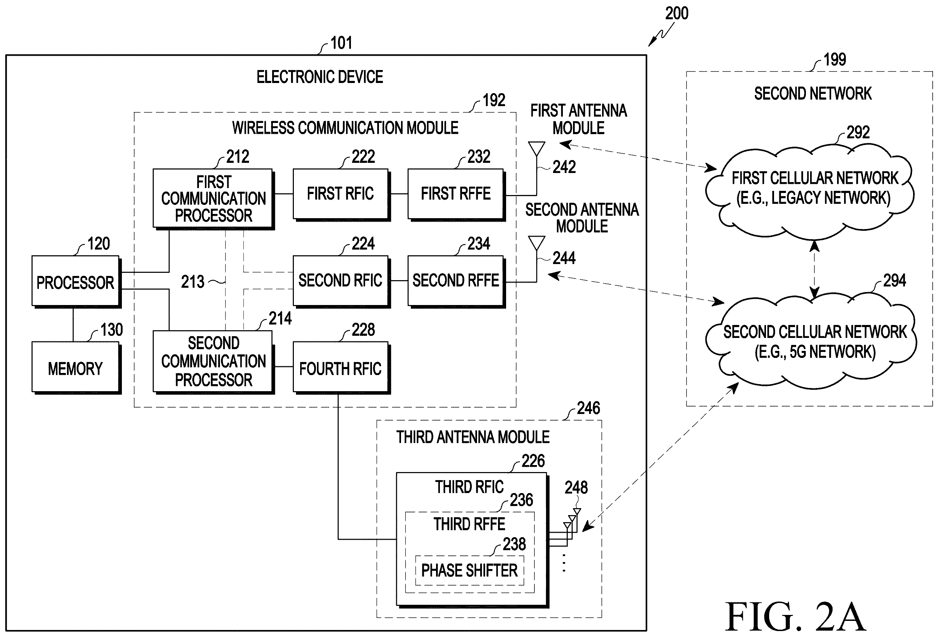

FIG. 2A is a block diagram 200 illustrating an electronic device 101 for supporting legacy network communication and 5G network communication according to an embodiment. Referring to FIG. 2A, the electronic device 101 may include a first communication processor 212, a second communication processor 214, a first radio frequency integrated circuit (RFIC) 222, a second RFIC 224, a third RFIC 226, a fourth RFIC 228, a first radio frequency front end (RFFE) 232, a second RFFE 234, a first antenna module 242, a second antenna module 244, a third antenna module 246, and antennas 248. The electronic device 101 may further include a processor 120 and memory 130. The second network 199 may include a first cellular network 292 and a second cellular network 294. According to an embodiment, the electronic device 101 may further include at least one component among the components of FIG. 1, and the second network 199 may further include at least one other network. According to an embodiment, the first communication processor 212, the second communication processor 214, the first RFIC 222, the second RFIC 224, the fourth RFIC 228, the first RFFE 232, and the second RFFE 234 may form at least part of the wireless communication module 192. According to another embodiment, the fourth RFIC 228 may be omitted or be included as part of the third RFIC 226.

The first communication processor 212 may establish a communication channel of a band that is to be used for wireless communication with the first cellular network 292 or may support legacy network communication via the established communication channel. According to an embodiment, the first cellular network may be a legacy network that includes second generation (2G), third generation (3G), fourth generation (4G), or long-term evolution (LTE) networks. The second communication processor 214 may establish a communication channel corresponding to a designated band (e.g., from about 6GHz to about 60GHz) among bands that are to be used for wireless communication with the second cellular network 294 or may support fifth generation (5G) network communication via the established communication channel. According to an embodiment, the second cellular network 294 may be a 5G network defined by the 3rd generation partnership project (3GPP). Additionally, according to an embodiment, the first communication processor 212 or the second communication processor 214 may establish a communication channel corresponding to another designated band (e.g., about 6GHz or less) among the bands that are to be used for wireless communication with the second cellular network 294 or may support fifth generation (5G) network communication via the established communication channel.

The first communication processor 212 may perform data transmission/reception with the second communication processor 214. For example, data classified as transmitted via the second cellular network 294 may be changed to be transmitted via the first cellular network 292. In this case, the first communication processor 212 may receive transmission data from the second communication processor 214. For example, the first communication processor 212 may transmit/receive data to/from the second communication processor 214 via an inter-processor interface 213. The inter-processor interface 213 may be implemented as, e.g., universal asynchronous receiver/transmitter (UART) (e.g., high speed-UART (HS-UART)) or peripheral component interconnect bus express (PCIe) interface, but is not limited to a specific kind. The first communication processor 212 and the second communication processor 214 may exchange packet data information and control information using, e.g., a shared memory. The first communication processor 212 may transmit/receive various types of information, such as sensing information, information about output strength, and resource block (RB) allocation information, to/from the second communication processor 214.

According to implementation, the first communication processor 212 may not be directly connected with the second communication processor 214. In this case, the first communication processor 212 may transmit/receive data to/from the second communication processor 214 via a processor 120 (e.g., an application processor). For example, the first communication processor 212 and the second communication processor 214 may transmit/receive data to/from the processor 120 (e.g., an application processor) via an HS-UART interface or PCIe interface, but the kind of the interface is not limited thereto. The first communication processor 212 and the second communication processor 214 may exchange control information and packet data information with the processor 120 (e.g., an application processor) using a shared memory.

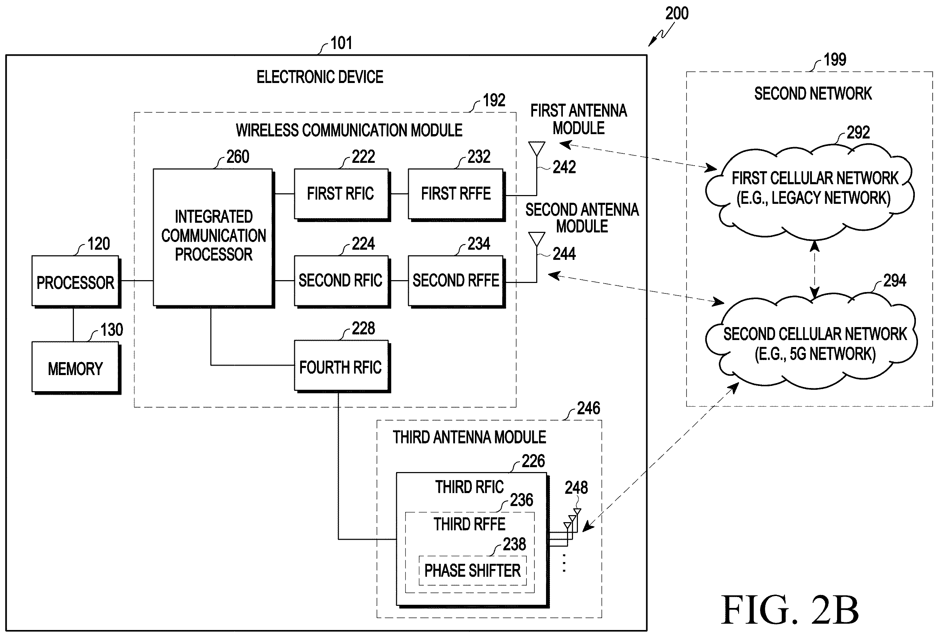

According to an embodiment, the first communication processor 212 and the second communication processor 214 may be implemented in a single chip or a single package. According to an embodiment, the first communication processor 212 or the second communication processor 214, along with the processor 120, an auxiliary processor (e.g., the auxiliary processor 123 of FIG. 1), or communication module (e.g., the communication module 190 of FIG. 1), may be formed in a single chip or single package. For example, as shown in FIG. 2B, an integrated communication processor 260 may support all of the functions for communication with the first cellular network 292 and the second cellular network 294.

As described above, at least one of the processor 120, the first communication processor 212, the second communication processor 214, or the integrated communication processor 260 may be implemented as a single chip or a single package. In this case, the single chip or single package may include memory (or storage means) storing instructions that cause at least some of operations performed according to an embodiment and a processing circuit (or operation circuit, but the term is not limited) for executing instructions.

Upon transmission, the first RFIC 222 may convert a baseband signal generated by the first communication processor 212 into a radio frequency (RF) signal with a frequency ranging from about 700MHz to about 3GHz which is used by the first cellular network 292 (e.g., a legacy network). Upon receipt, the RF signal may be obtained from the first cellular network 292 (e.g., a legacy network) through an antenna (e.g., the first antenna module 242) and be pre-processed via an RFFE (e.g., the first RFFE 232). The first RFIC 222 may convert the pre-processed RF signal into a baseband signal that may be processed by the first communication processor 212.

Upon transmission, the second RFIC 224 may convert the baseband signal generated by the first communication processor 212 or the second communication processor 214 into a Sub6-band (e.g., about 6GHz or less) RF signal (hereinafter, "5G Sub6 RF signal") that is used by the second cellular network 294 (e.g., a 5G network). Upon receipt, the 5G Sub6 RF signal may be obtained from the second cellular network 294 (e.g., a 5G network) through an antenna (e.g., the second antenna module 244) and be pre-processed via an RFFE (e.g., the second RFFE 234). The second RFIC 224 may convert the pre-processed 5G Sub6 RF signal into a baseband signal that may be processed by a corresponding processor of the first communication processor 212 and the second communication processor 214.

The third RFIC 226 may convert the baseband signal generated by the second communication processor 214 into a 5G Above6 band (e.g., from about 6GHz to about 60GHz) RF signal (hereinafter, "5G Above6 RF signal") that is to be used by the second cellular network 294 (e.g., a 5G network). Upon receipt, the 5G Above6 RF signal may be obtained from the second cellular network 294 (e.g., a 5G network) through an antenna (e.g., the antenna 248) and be pre-processed via the third RFFE 236. The third RFIC 226 may convert the pre-processed 5G Above6 RF signal into a baseband signal that may be processed by the second communication processor 214. According to an embodiment, the third RFFE 236 may be formed as part of the third RFIC 226.

According to an embodiment, the electronic device 101 may include the fourth RFIC 228 separately from, or as at least part of, the third RFIC 226. In this case, the fourth RFIC 228 may convert the baseband signal generated by the second communication processor 214 into an intermediate frequency band (e.g., from about 9GHz to about 11GHz) RF signal (hereinafter, "IF signal") and transfer the IF signal to the third RFIC 226. The third RFIC 226 may convert the IF signal into a 5G Above6 RF signal. Upon receipt, the 5G Above6 RF signal may be received from the second cellular network 294 (e.g., a 5G network) through an antenna (e.g., the antenna 248) and be converted into an IF signal by the third RFIC 226. The fourth RFIC 228 may convert the IF signal into a baseband signal that may be processed by the second communication processor 214.

According to an embodiment, the first RFIC 222 and the second RFIC 224 may be implemented as at least part of a single chip or single package. According to an embodiment, when the first RFIC 222 and the second RFIC 224 in FIG. 2A or 2B are implemented as a single chip or a single package, they may be implemented as an integrated RFIC. In this case, the integrated RFIC is connected to the first RFFE 232 and the second RFFE 234 to convert a baseband signal into a signal of a band supported by the first RFFE 232 and/or the second RFFE 234, and may transmit the converted signal to one of the first RFFE 232 and the second RFFE 234. According to an embodiment, the first RFFE 232 and the second RFFE 234 may be implemented as at least part of a single chip or single package. According to an embodiment, at least one of the first antenna module 242 or the second antenna module 244 may be omitted or be combined with another antenna module to process multi-band RF signals.

According to an embodiment, the third RFIC 226 and the antenna 248 may be disposed on the same substrate to form the third antenna module 246. For example, the wireless communication module 192 or the processor 120 may be disposed on a first substrate (e.g., a main printed circuit board (PCB)). In this case, the third RFIC 226 and the antenna 248, respectively, may be disposed on one area (e.g., the bottom) and another (e.g., the top) of a second substrate (e.g., a sub PCB) which is provided separately from the first substrate, forming the third antenna module 246. Placing the third RFIC 226 and the antenna 248 on the same substrate may shorten the length of the transmission line therebetween. This may reduce a loss (e.g., attenuation) of high-frequency band (e.g., from about 6GHz to about 60GHz) signal used for 5G network communication due to the transmission line. Thus, the electronic device 101 may enhance the communication quality with the second cellular network 294 (e.g., a 5G network).

According to an embodiment, the antenna 248 may be formed as an antenna array which includes a plurality of antenna elements available for beamforming. In this case, the third RFIC 226 may include a plurality of phase shifters 238 corresponding to the plurality of antenna elements, as part of the third RFFE 236. Upon transmission, the plurality of phase shifters 238 may change the phase of the 5G Above6 RF signal which is to be transmitted to the outside (e.g., a 5G network base station) of the electronic device 101 via their respective corresponding antenna elements. Upon receipt, the plurality of phase shifters 238 may change the phase of the 5G Above6 RF signal received from the outside to the same or substantially the same phase via their respective corresponding antenna elements. This enables transmission or reception via beamforming between the electronic device 101 and the outside.

The second cellular network 294 (e.g., a 5G network) may be operated independently (e.g., as standalone (SA)) from, or in connection (e.g., as non-standalone (NSA)) with the first cellular network 292 (e.g., a legacy network). For example, the 5G network may have the access network (e.g., 5G radio access network (RAN) or next generation RAN (NG RAN)) but may not have the core network (e.g., next generation core (NGC)). In this case, the electronic device 101, after accessing a 5G network access network, may access an external network (e.g., the Internet) under the control of the core network (e.g., the evolved packet core (EPC)) of the legacy network. Protocol information (e.g., LTE protocol information) for communication with the legacy network or protocol information (e.g., New Radio (NR) protocol information) for communication with the 5G network may be stored in the memory 130 and be accessed by other components (e.g., the processor 120, the first communication processor 212, or the second communication processor 214).

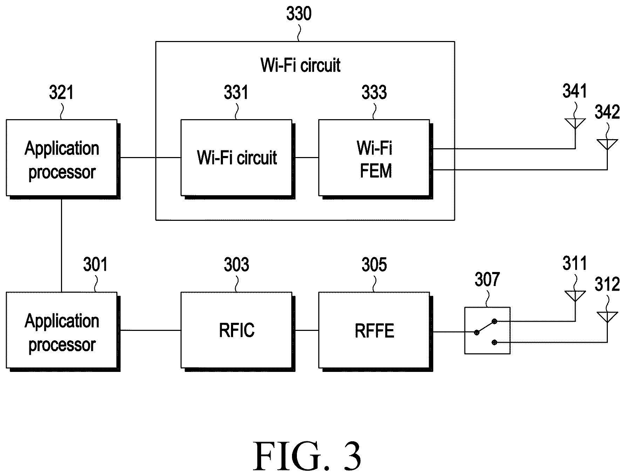

FIG. 3 is a block diagram illustrating an example electronic device according to an embodiment.

According to an embodiment, the communication processor 301 (e.g., at least one of the first communication processor 212, the second communication processor 214, or the integrated communication processor 260 of FIG. 2) may transmit and/or receive a baseband signal to/from an RFIC 303 (e.g., at least one of the first RFIC 222, the second RFIC 224, the third RFIC 226, or the fourth RFIC 228 of FIG. 2). The RFIC 303 may process at least one RF signal associated with at least one RF path. Here, the RF path may include, e.g., at least one piece of hardware (e.g., at least one of an RFIC, RFFE, or antenna) for transmitting an RF signal. For example, the RFIC 303 may receive at least one baseband signal from the communication processor 301 and generate at least one or more RF signals. It will be easily appreciated by one of ordinary skill in the art that although the RFIC 303 is shown as one module in the example of FIG. 3, this is an example, and the number of modules in which the RFIC 303 is implemented is not limited.

According to an embodiment, the RFIC 303 may provide at least one RF signal to an RFFE 305. The RFFE 305 may process (e.g., amplify) the provided RF signal and provide it. The communication processor 301 may determine the degree of amplification of the RFFE 305 based on the set maximum transmission power level and/or transmission power. Although not illustrated, the degree of amplification of the RFFE 305 may be controlled based on an average power tracking (APT) module and/or an envelope tracking (ET) module. It will be easily appreciated by one of ordinary skill in the art that although the RFFE 305 is shown as one module in the example of FIG. 3, this is an example, and the number of modules in which the RFFE 305 is implemented is not limited. According to an embodiment, one RFFE may process a plurality of RF signals.

According to an embodiment, the RFFE 305 may be connected to a single pole double throw (SPDT) switch 307, and an output terminal of the SPDT switch 307 may be connected to antennas 311 and 312 included in the first antenna group. The SPDT switch 307 may be configured to connect the RFFE 305 to at least one antenna among a first cellular antenna 311 or a second cellular antenna 312. In an embodiment, the first antenna group may include one or more antennas 311 and 312 for supporting cellular communication.

In an embodiment, referring to FIG. 3, according to an embodiment, an application processor 321 (e.g., the processor 120 of FIG. 1 and/or FIG. 2) may be connected to the communication processor 301. The application processor 321 may be connected to a Wi-Fi circuit 330. In an embodiment, the Wi-Fi circuit 330 may include a Wi-Fi integrated circuit (IC) 331 configured to provide at least one RF signal to a Wi-Fi front-end module (FEM) 333 and the Wi-Fi FEM 333 configured to process (e.g., amplify) the provided RF signal and provide it, which may be an example. According to an embodiment, the Wi-Fi circuit 330 may be referred to as "at least one short-range communication circuit (or at least one short-range communication module)".

In an embodiment, in the example of FIG. 3, the antennas 341 and 342 included in the second antenna group may be connected to (or included in) the Wi-Fi circuit 330. In an embodiment, the second antenna group may include one or more antennas 341 and 342 for supporting non-cellular communication. For example, the antennas 341 and 342 may be an antenna corresponding to a frequency band associated with Wi-Fi communication. For example, the antennas 341 and 342 may be antennas corresponding to a first frequency (e.g., may be about 2.4 GHz, without limitation). The antennas 341 and 342 may be antennas corresponding to a second frequency (e.g., may be about 5 GHz, without limitation). In an embodiment, unlike illustrated in FIG. 3, the electronic device 101 may include three or more antennas for supporting Wi-Fi communication. In an embodiment, some of three or four antennas for supporting Wi-Fi communication may be an antenna corresponding to the first frequency. In an embodiment, some of three or four antennas for supporting Wi-Fi communication may be an antenna corresponding to the second frequency. In an embodiment, all of three or four antennas for supporting Wi-Fi communication may be implemented as an antenna corresponding to the same frequency. In FIG. 3, the antennas 311 and 312 included in the first antenna group and the antennas 341 and 342 included in the second antenna group are illustrated as being distinguished from each other by way of example, and in an embodiment, the same antenna may be configured to support both cellular communication and Wi-Fi communication. In an embodiment, the antennas 341 and 342 may be connected to elements for RF signal processing included in the Wi-Fi circuit 330. In an embodiment, the Wi-Fi circuit 330 may be connected to the antennas 341 and 342 through at least a portion of an RF circuit (e.g., the RFIC 303 and/or the RFFE 305). In this case, at least a portion of the RF circuit (e.g., the RFIC 303 and/or the RFFE 305) may be used for short-range communication (e.g., Wi-Fi communication), and there is no limitation on the implementation. In an embodiment, the Wi-Fi circuit 330 providing an RF signal for Wi-Fi communication to at least a portion of at least one antenna 341 and 342 may mean that the Wi-Fi circuit 330 directly applies the RF signal to at least a portion of at least one antenna 341 and 342 or controls at least a portion of the RF circuit such that the RF signal is provided to at least a portion of at least one antenna 341 and 342, and there is no limitation. In an embodiment, the Wi-Fi circuit 330 may be configured to operate in a MIMO mode or a SISO mode based on a control signal received from the communication processor 301 and/or the application processor 321. In an embodiment, when the Wi-Fi circuit 330 is configured to operate in the MIMO mode, the electronic device 101 may transmit/receive an RF signal of a frequency band corresponding to Wi-Fi communication through one or more antennas 341 and 342 for supporting Wi-Fi communication. In an embodiment, when the Wi-Fi circuit 330 is configured to operate in the SISO mode, the electronic device 101 may transmit/receive an RF signal of a frequency band corresponding to Wi-Fi communication through only one antenna among one or more antennas 341 and 342 for supporting Wi-Fi communication.

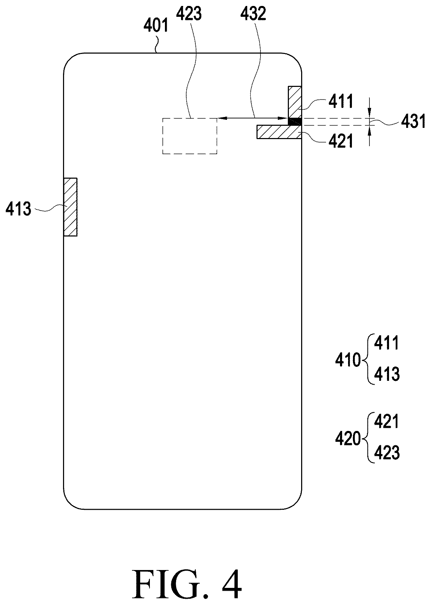

FIG. 4 is a view illustrating an exemplary electronic device according to time according to an embodiment.

In an embodiment, a housing 401 of the electronic device (e.g., the electronic device 101 of FIG. 1 and/or FIG. 2) may include a plurality of antenna 411, 413, 421, and 423. For example, the housing 401 of the electronic device may include antennas 411 and 413 for supporting cellular communication included in a first antenna group 410. The housing 401 of the electronic device may include antenna 421 and 423 for supporting Wi-Fi communication included in a second antenna group 420. In an embodiment, each of the antenna 411, 413, 421, and 423 may be disposed inside the housing and/or may be disposed on a portion of the housing. In an embodiment, the antennas 411 and 413 for supporting cellular communication may be antennas corresponding to different frequency bands. For example, the first cellular antenna 411 (e.g., the first cellular antenna 311 of FIG. 3) may be configured to transmit/receive an RF signal of an N78 band and/or an N79 band. In an embodiment, the N78 band and the N79 band may be at least partially the same frequency band as a band corresponding to Wi-Fi communication. In an embodiment, a band associated with a band corresponding to Wi-Fi communication (e.g., the N78 band and/or the N79 band) and/or a band that may have a relatively large effect on the performance of Wi-Fi communication may be referred to as a "first band". The second cellular antenna 413 (e.g., the second cellular antenna 312) may be configured to transmit/receive an RF signal of a band different from a band corresponding to Wi-Fi communication. In an embodiment, a band different from a band corresponding to Wi-Fi communication and/or a band that may have a relatively small effect on the performance of Wi-Fi communication may be referred to as a "second band". In an embodiment, the antenna 421 and 423 for supporting Wi-Fi communication may be antennas corresponding to different frequency bands. In an embodiment, the distance between each of the antenna 421 and 423 for supporting Wi-Fi communication and the first cellular antenna 411 may be different. For example, the distance 431 between the first non-cellular antenna 421 and the first cellular antenna 411 may be less than the distance 432 between the second non-cellular antenna 423 and the first cellular antenna 411. The second non-cellular antenna 423 may be disposed to have a longer distance from the first cellular antenna 411 than the first non-cellular antenna 421. In an embodiment, when an RF signal of the first band is transmitted through the first cellular antenna 411, the RF signal of the first band may flow into the first non-cellular antenna transmitting/receiving an RF signal of a band adjacent to the first band. In FIG. 4, for convenience of description, a relatively small number of antennas are shown as being included in the housing 401 of the electronic device, and one of ordinary skill in the art will easily understand that a larger number of antennas may be included in the housing 401 of the electronic device.

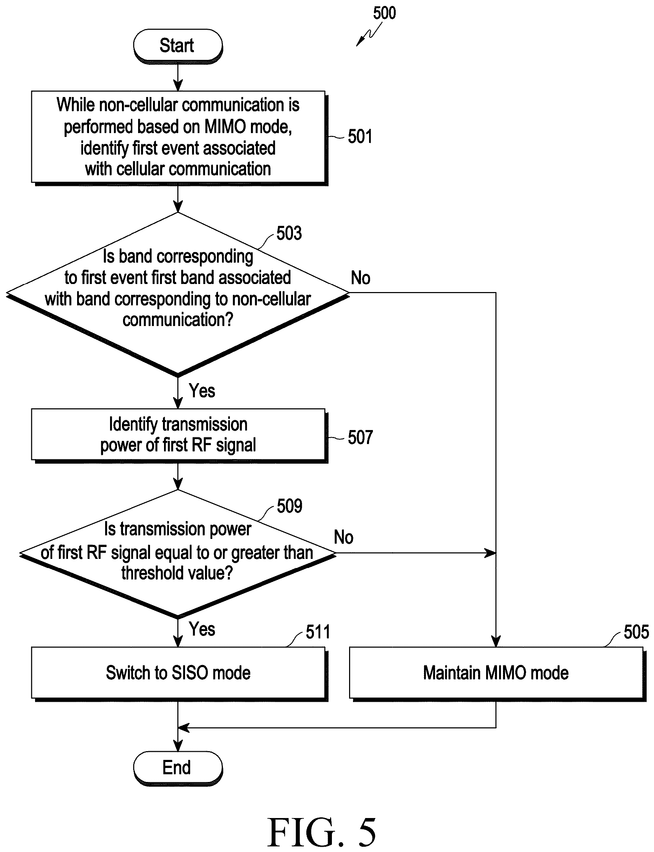

FIG. 5 illustrates a flowchart 500 for describing a method of operating an electronic device according to an embodiment.

In the following embodiment, each operation may be performed sequentially, but is not necessarily performed sequentially. For example, the order of the operations may be changed, and at least two operations may be performed in parallel.

According to an embodiment, the electronic device 101 (e.g., at least one of the processor 120, the first communication processor 212, the second communication processor 214, or the integrated communication processor 260 of FIG. 1 and/or FIG. 2) may identify a first event associated with cellular communication in operation 501 while non-cellular communication is performed based on a MIMO mode. In an embodiment, the electronic device 101 (e.g., the communication processor 301 of FIG. 3) may be configured to control a first RF signal for cellular communication to be provided to a first antenna (e.g., the first cellular antenna 411 and/or the second cellular antenna 413 of FIG. 4) included in a first antenna group (e.g., the first antenna group 410 of FIG. 4). The electronic device 101 (e.g., the Wi-Fi circuit 330 of FIG. 3 (or Wi-Fi module and/or the auxiliary processor 123)) may be configured to control a second RF signal for non-cellular communication to be provided to at least one antenna among a second antenna (e.g., the first non-cellular antenna 421 of FIG. 4) or a third antenna (e.g., the second non-cellular antenna 423 of FIG. 4) included in a second antenna group (e.g., the second antenna group 420 of FIG. 4). In an embodiment, the electronic device 101 may identify a first event associated with cellular communication while the non-cellular communication is performed through the second antenna and the third antenna based on the MIMO mode. In an embodiment, the first event may be an event to transmit an RF signal associated with cellular communication. For example, the electronic device 101 may identify an event associated with initiation of a voice call service.

In an embodiment, based on identifying the first event associated with cellular communication, the electronic device 101 may identify whether a band corresponding to the first event is a first band associated with a band corresponding to non-cellular communication in operation 503. In an embodiment, the electronic device 101 may identify whether a band corresponding to cellular communication is a band adjacent to a band corresponding to non-cellular communication. For example, the band corresponding to non-cellular communication may be about 2.4 GHz or about 5 GHz band. The electronic device 101 may identify that the band corresponding to the first event is the first band based on identifying that the band corresponding to cellular communication is an N40 band, an N41 band, an N78 band, and/or an N79 band, and the specific frequency band corresponding to the first band is not limited to the above-described examples. In an embodiment, based on identifying that the band corresponding to the first event is not the first band associated with the band corresponding to non-cellular communication, the electronic device 101 may maintain the MIMO mode in operation 505. The electronic device 101 may maintain the operation mode of the Wi-Fi circuit 330 in the MIMO mode based on identifying that the band corresponding to the first event is not the first band.

In an embodiment, based on identifying that the band corresponding to the first event is the first band associated with the band corresponding to non-cellular communication, the electronic device 101 may identify the transmission power of the first RF signal in operation 507. In an embodiment, the electronic device 101 may identify the transmission power of the first RF signal based on identifying a strength of an RF signal received from a first network associated with cellular communication. For example, the electronic device 101 may identify the transmission power of the first RF signal based on identifying a received signal strength indicator (RSSI), a reference signal received power (RSRP), and/or a reference signal received quality (RSRQ) of the received RF signal. The electronic device 101 may identify whether a transmission signal associated with cellular communication has a relatively high risk of damage to the Wi-Fi circuit 330 based on identifying the transmission power of the first RF signal.

In an embodiment, based on identifying the transmission power of the first RF signal, the electronic device 101 may identify whether the transmission power of the first RF signal is equal to or greater than a threshold in operation 509. In an embodiment, the threshold of the transmission power of the first RF signal may be set corresponding to a first parameter associated with cellular communication. For example, the first parameter may include information of at least one of a bandwidth of the cellular communication, a modulation scheme associated with the cellular communication, or a channel of the cellular communication. In an embodiment, the threshold may be set as illustrated in Table 1. For example, the threshold of the first RF signal may be set within a range of about 14 to 17 dBm. In an embodiment, the threshold may be set further considering a modulation scheme. For example, as a modulation and coding scheme (MCS) value of a modulation scheme increases, a required value for a maximum transmission power may decrease due to a reason such as an error vector magnitude (EVM).

**[Table 1]**

| | | Bandwidth [MHz] | | | | | | | | | |
|---|---|---|---|---|---|---|---|---|---|---|---|
| | | 10 | 20 | 30 | 40 | 50 | 60 | 70 | 80 | 90 | 100 |
| Channel | 693334 | - | - | - | - | - | - | - | - | - | - |
| | 693335 | - | - | - | - | - | - | - | - | - | - |
| | 693336 | - | - | - | - | - | - | - | - | - | - |
| | 693337 | - | - | - | - | - | - | - | - | - | - |
| | 693338 | - | - | - | - | - | - | - | - | - | - |
| | 693339 | - | - | - | - | - | - | - | - | - | - |
| | . | | | | | | | | | | |
| | . | | | | | | | | | | |
| | . | | | | | | | | | | |
| | 733320 | 17 | 17 | 17 | 17 | 17 | 17 | 17 | 17 | 16 | 16 |
| | 733321 | 17 | 17 | 17 | 17 | 17 | 17 | 17 | 17 | 16 | 16 |
| | 733322 | 17 | 17 | 17 | 17 | 17 | 16 | 16 | 16 | 16 | 16 |
| | 733323 | 17 | 17 | 17 | 17 | 17 | 16 | 16 | 16 | 16 | 16 |
| | 733324 | 17 | 17 | 17 | 17 | 17 | 16 | 16 | 16 | 16 | 16 |
| | 733325 | 17 | 17 | 17 | 17 | 17 | 16 | 16 | 16 | 16 | 16 |
| | 733326 | 17 | 17 | 17 | 17 | 17 | 16 | 16 | 16 | 16 | 16 |
| | 733327 | 17 | 17 | 17 | 17 | 17 | 16 | 16 | 16 | 16 | 16 |
| | 733328 | 16 | 16 | 16 | 16 | 16 | 15 | 15 | 15 | 14 | 14 |
| | 733329 | 16 | 16 | 16 | 16 | 16 | 15 | 15 | 15 | 14 | 14 |
| | 733330 | 16 | 16 | 16 | 16 | 16 | 15 | 15 | 15 | 14 | 14 |
| | 733331 | 16 | 16 | 16 | 16 | 16 | 15 | 15 | 15 | 14 | 14 |
| | 733332 | 16 | 16 | 16 | 16 | 16 | 15 | 15 | 15 | 14 | 14 |
| | 733333 | 16 | 16 | 16 | 16 | 16 | 15 | 15 | 15 | 14 | 14 |

In an embodiment, the electronic device 101 may identify a first parameter associated with the cellular communication based on identifying a message received from a first network associated with the cellular communication. The electronic device 101 may identify the threshold set corresponding to the first parameter as illustrated in Table 1.

In an embodiment, based on identifying that the transmission power of the first RF signal is less than the threshold, the electronic device 101 may maintain the MIMO mode in operation 505. The electronic device 101 may maintain the operation mode of the Wi-Fi circuit 330 in the MIMO mode based on identifying that the transmission power of the first RF signal is less than the threshold. The electronic device 101 may maintain the operation mode of the Wi-Fi circuit 330 in the MIMO mode based on identifying that the transmission power of an RF signal corresponding to cellular communication is relatively low.

In an embodiment, based on identifying that the transmission power of the first RF signal is equal to or greater than the threshold, the electronic device 101 may switch to the SISO mode in operation 511. The electronic device 101 may switch the operation mode of the Wi-Fi circuit 330 to the SISO mode by controlling the Wi-Fi circuit 330 such that the second RF signal is provided to the third antenna (e.g., the second non-cellular antenna 421) having a distance from the first antenna (e.g., the first cellular antenna 411) longer than the second antenna (e.g., the first non-cellular antenna 421), based on identifying that the transmission power of the first RF signal is equal to or greater than the threshold. The electronic device 101 may relatively reduce the risk of damage to a component (e.g., a low-noise amplifier (LNA)) of the Wi-Fi FEM (e.g., the Wi-Fi FEM 333 of FIG. 3) that may occur due to the first RF signal flowing into the Wi-Fi circuit 330 through the second antenna, based on performing Wi-Fi communication through only the third antenna.

In an embodiment, the electronic device 101 may monitor a connection state of cellular communication after changing the operation mode of the Wi-Fi circuit 330. For example, the electronic device 101 may identify whether a voice call service associated with cellular communication is terminated based on switching the operation mode of the Wi-Fi circuit 330 to the SISO mode. In an embodiment, the electronic device 101 may switch the operation mode of the Wi-Fi circuit 330 to the MIMO mode based on identifying that the voice call service is terminated. The electronic device 101 may restore the operation mode of the Wi-Fi circuit 330 to the MIMO mode based on identifying that the risk of damage to the Wi-Fi circuit 330 due to inflow of the first RF signal has decreased based on termination of the voice call service. In an embodiment, the electronic device 101 may maintain the operation mode of the Wi-Fi circuit 330 in the SISO mode based on identifying that the voice call service is being performed. The electronic device 101 may maintain the operation mode of the Wi-Fi circuit 330 in the SISO mode based on identifying that the risk of damage to the Wi-Fi circuit 330 due to inflow of the first RF signal is still relatively high.

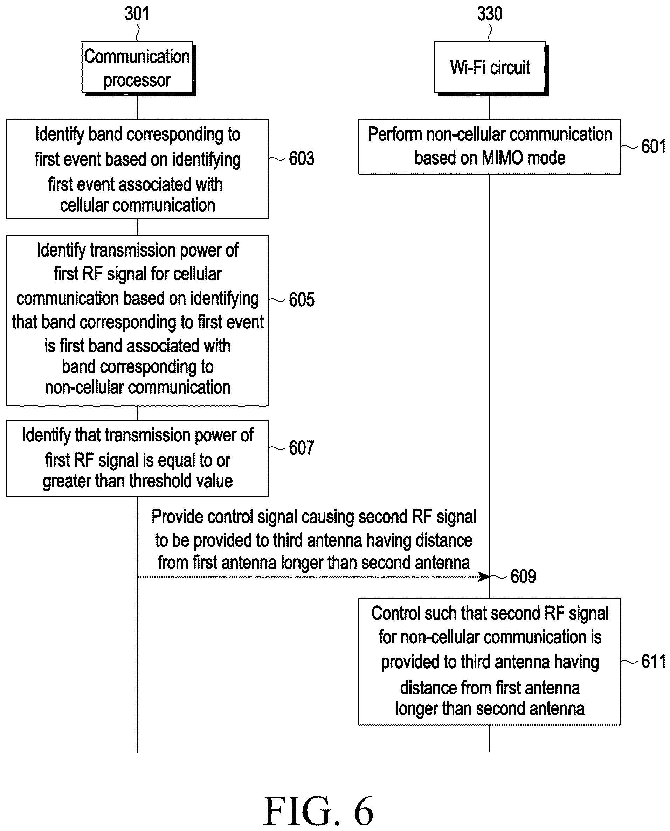

FIG. 6 illustrates a flowchart for describing an operation method of an electronic device according to an embodiment.

In the following embodiment, each operation may be performed sequentially, but is not necessarily performed sequentially. For example, the order of the operations may be changed, and at least two operations may be performed in parallel.

In an embodiment, the Wi-Fi circuit 330 (or Wi-Fi module and/or the auxiliary processor 123) may perform non-cellular communication based on a MIMO mode in operation 601. For example, the Wi-Fi circuit 330 may transmit/receive an RF signal associated with Wi-Fi communication through the first non-cellular antenna 421 and the second non-cellular antenna 423 of FIG. 4.

In an embodiment, the communication processor 301 may identify a band corresponding to a first event based on identifying the first event associated with cellular communication in operation 603. For example, the electronic device 101 may identify a band associated with providing a voice call service based on identifying an event associated with initiation of the voice call service.

In an embodiment, the communication processor 301 may identify transmission power of a first RF signal for cellular communication in operation 605 based on identifying that a band corresponding to the first event is a first band associated with a band corresponding to non-cellular communication. For example, the communication processor 301 may identify that a band associated with the voice call service is an N78 band, and the band associated with the voice call service is not limited to the above-described example. The communication processor 301 may identify the transmission power of the first RF signal corresponding to the N78 band. For example, the communication processor 301 may identify the transmission power of the first RF signal based on identifying a strength of an RF signal received from a network.

In an embodiment, the communication processor 301 may identify that the transmission power of the first RF signal is equal to or greater than a threshold in operation 607. The communication processor 301 may identify a first parameter including information of at least one of a bandwidth of cellular communication, a channel, or a modulation scheme based on a message received from the network. The communication processor 301 may compare the identified transmission power of the RF signal with the identified threshold based on identifying the threshold set corresponding to the first parameter.

In an embodiment, based on identifying that the transmission power of the identified RF signal is equal to or greater than the identified threshold, the communication processor 301 may provide a control signal causing the second RF signal to be provided to a third antenna (e.g., the second non-cellular antenna 423 of FIG. 4) having a distance from a first antenna (e.g., the first cellular antenna 411 of FIG. 4) longer than a second antenna (e.g., the first non-cellular antenna 421 of FIG. 4) in operation 609.

In an embodiment, based on receiving the control signal from the communication processor 301, the Wi-Fi circuit 330 may control such that a second RF signal for non-cellular communication is provided to the third antenna having a distance from the first antenna longer than the second antenna in operation 611.

In an embodiment, the electronic device 101 may relatively reduce the risk of damage to a short-range communication module (e.g., the Wi-Fi circuit 330) due to inflow of a cellular transmission signal based on performing non-cellular communication through a non-cellular antenna farther away from the cellular antenna.

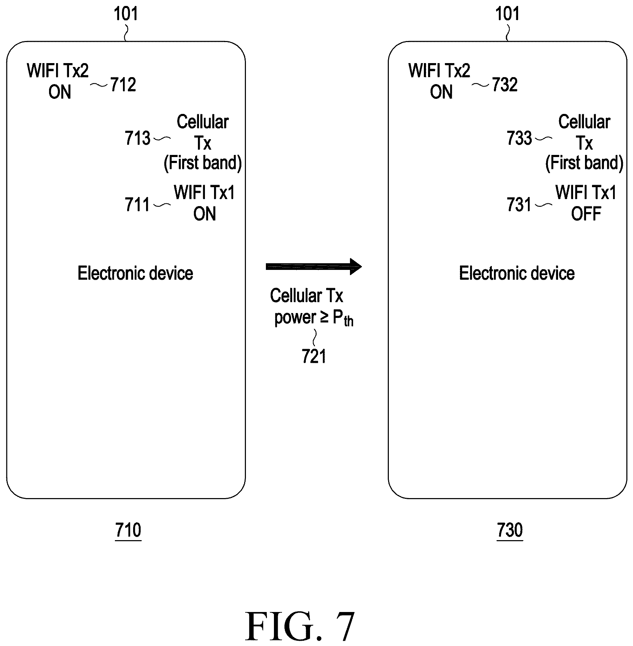

FIG. 7 is a view illustrating transmission antenna change of an electronic device according to an embodiment.

According to an embodiment, referring to reference numeral 710, the electronic device 101 may provide an RF signal 711 for non-cellular communication to a first non-cellular antenna disposed on one side of the housing of the electronic device 101. The electronic device 101 may provide an RF signal 712 for non-cellular communication to a second non-cellular antenna disposed inside the housing of the electronic device 101. The electronic device 101 may perform a 2TX operation (e.g., MIMO or diversity) for non-cellular communication. In an embodiment, the electronic device 101 may identify a first event associated with cellular communication while performing the 2TX operation for non-cellular communication. The electronic device 101 may provide an RF signal 713 for cellular communication associated with the first band to the first cellular antenna. The electronic device 101 may identify (721) that the transmission power of an RF signal for cellular communication associated with the first band is equal to or greater than a threshold (Pth).

In an embodiment, referring to reference numeral 730, the electronic device 101 may not provide an RF signal 731 for non-cellular communication to the first non-cellular antenna disposed on one side of the housing of the electronic device 101. The electronic device 101 may provide an RF signal 732 for non-cellular communication to a second non-cellular antenna disposed inside the housing of the electronic device 101. The electronic device 101 may provide an RF signal 733 for cellular communication associated with the first band to the first cellular antenna adjacent to the first non-cellular antenna. The electronic device 101 may perform a 1TX operation (e.g., SISO) for non-cellular communication. The electronic device 101 may relatively reduce the risk of damage to a short-range communication module (e.g., the Wi-Fi circuit 330 of FIG. 3) (or short-range communication circuit and/or the auxiliary processor 123) based on performing the 1TX operation based on the second non-cellular antenna relatively far from the first cellular antenna.

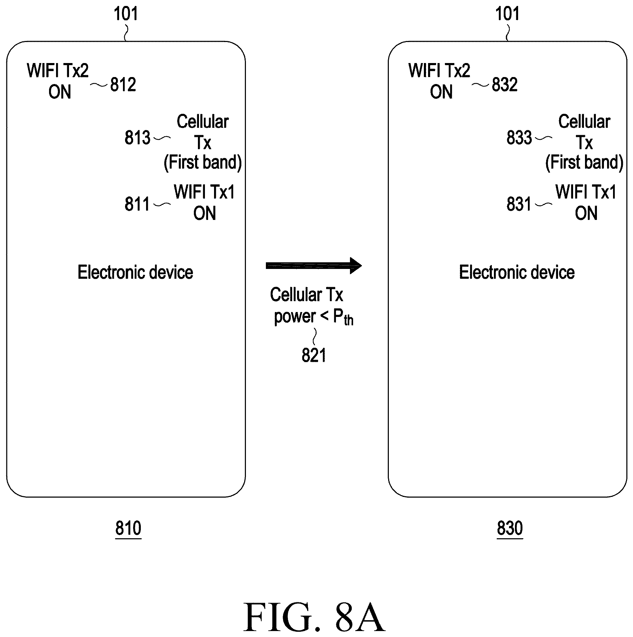

FIG. 8A is a view illustrating example operations of an electronic device according to an embodiment.

According to an embodiment, referring to reference numeral 810, the electronic device 101 may provide an RF signal 811 for non-cellular communication to a first non-cellular antenna disposed on one side of the housing of the electronic device 101. The electronic device 101 may provide an RF signal 812 for non-cellular communication to a second non-cellular antenna disposed inside the housing of the electronic device 101. The electronic device 101 may perform a 2TX operation (e.g., MIMO or diversity) for non-cellular communication. In an embodiment, the electronic device 101 may identify a first event associated with cellular communication while performing the 2TX operation for non-cellular communication. The electronic device 101 may provide an RF signal 813 for cellular communication associated with the first band to the first cellular antenna. The electronic device 101 may identify (821) that the transmission power of an RF signal for cellular communication associated with the first band is less than a threshold (Pth).

In an embodiment, referring to reference numeral 830, the electronic device 101 may provide an RF signal 831 for non-cellular communication to the first non-cellular antenna disposed on one side of the housing of the electronic device 101. The electronic device 101 may provide an RF signal 832 for non-cellular communication to a second non-cellular antenna disposed inside the housing of the electronic device 101. The electronic device 101 may provide an RF signal 833 for cellular communication associated with the first band to the first cellular antenna adjacent to the first non-cellular antenna. The electronic device 101 may maintain the 2TX operation considering that a transmission signal for cellular communication having a transmission power equal to or less than the threshold has a relatively low risk of causing damage to a short-range communication module (e.g., the Wi-Fi circuit 330 of FIG. 3) (or short-range communication circuit and/or the auxiliary processor 123).

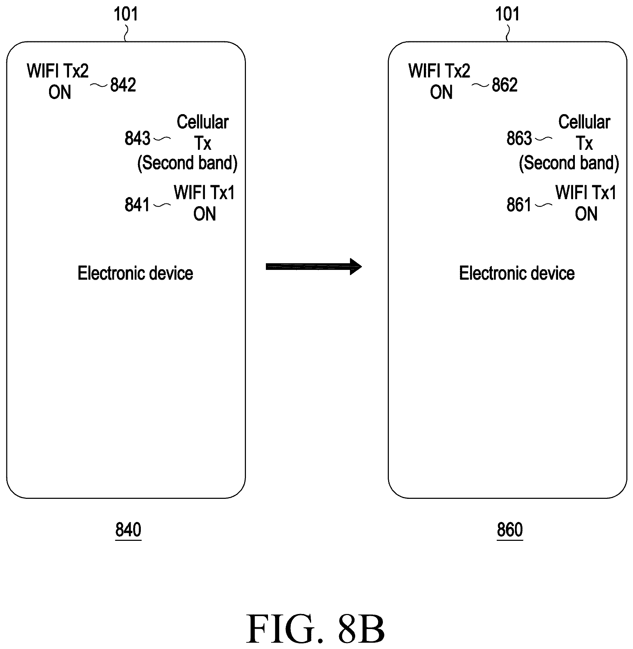

FIG. 8B is a view illustrating example operations of an electronic device according to an embodiment.

According to an embodiment, referring to reference numeral 840, the electronic device 101 may provide an RF signal 841 for non-cellular communication to a first non-cellular antenna disposed on one side of the housing of the electronic device 101. The electronic device 101 may provide an RF signal 842 for non-cellular communication to a second non-cellular antenna disposed inside the housing of the electronic device 101. The electronic device 101 may perform a 2TX operation (e.g., MIMO or diversity) for non-cellular communication. In an embodiment, the electronic device 101 may identify a first event associated with cellular communication while performing the 2TX operation for non-cellular communication. The electronic device 101 may provide an RF signal 843 for cellular communication associated with the second band to the first cellular antenna. In an embodiment, the second band may be a band different from a frequency band corresponding to Wi-Fi communication.

In an embodiment, referring to reference numeral 860, the electronic device 101 may provide an RF signal 861 for non-cellular communication to the first non-cellular antenna disposed on one side of the housing of the electronic device 101. The electronic device 101 may provide an RF signal 862 for non-cellular communication to a second non-cellular antenna disposed inside the housing of the electronic device 101. The electronic device 101 may provide an RF signal 863 for cellular communication associated with the first band to the first cellular antenna adjacent to the first non-cellular antenna. The electronic device 101 may maintain the 2TX operation considering that a transmission signal for cellular communication associated with a band different from a band corresponding to Wi-Fi communication has a relatively low risk of causing damage to a short-range communication module (e.g., the Wi-Fi circuit 330).

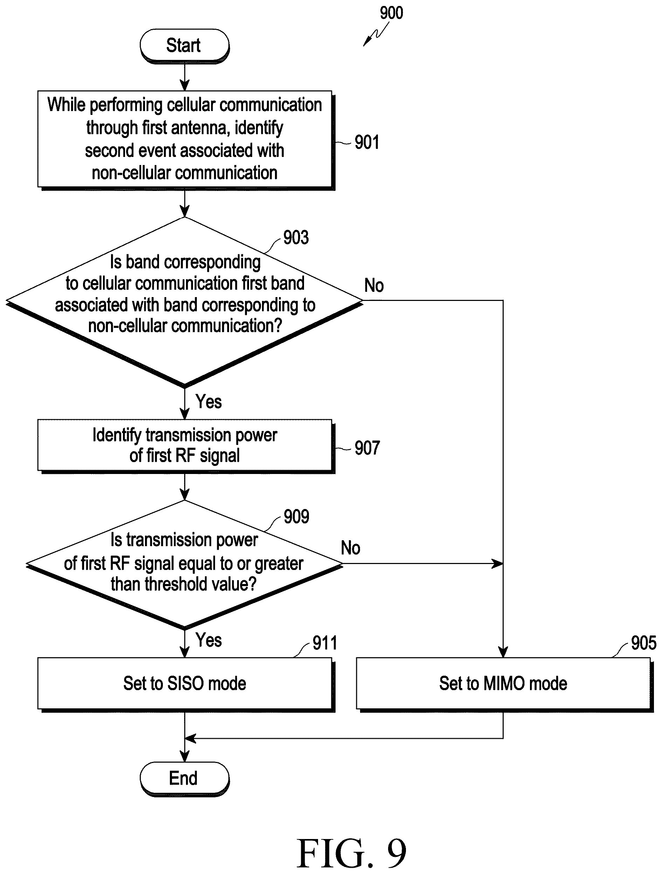

FIG. 9 illustrates a flowchart 900 for describing a method of operating an electronic device according to an embodiment.

In the following embodiment, each operation may be performed sequentially, but is not necessarily performed sequentially. For example, the order of the operations may be changed, and at least two operations may be performed in parallel.

According to an embodiment, the electronic device 101 (e.g., at least one of the processor 120, the first communication processor 212, the second communication processor 214, or the integrated communication processor 260 of FIG. 1 and/or FIG. 2) may identify a second event associated with non-cellular communication in operation 901 while performing cellular communication through a first antenna (e.g., the first cellular antenna 411 and/or the second cellular antenna 413 of FIG. 4). In an embodiment, the electronic device 101 (e.g., the communication processor 301 of FIG. 3) may be configured to control a first RF signal for cellular communication to be provided to a first antenna included in a first antenna group (e.g., the first antenna group 410 of FIG. 4). The electronic device 101 (e.g., the Wi-Fi circuit 330 of FIG. 3 (or at least one short-range communication circuit and/or the auxiliary processor 123)) may be configured to control a second RF signal for non-cellular communication to be provided to at least one antenna among a second antenna (e.g., the first non-cellular antenna 421 of FIG. 4) or a third antenna (e.g., the second non-cellular antenna 423 of FIG. 4) included in a second antenna group (e.g., the second antenna group 420 of FIG. 4). In an embodiment, the electronic device 101 may identify that Wi-Fi communication is connected while performing cellular communication.

In an embodiment, based on identifying the second event associated with non-cellular communication, the electronic device 101 may identify whether a band corresponding to cellular communication is a first band associated with a band corresponding to non-cellular communication in operation 903. In an embodiment, the electronic device 101 may identify whether a band corresponding to cellular communication is a band adjacent to a band corresponding to non-cellular communication. For example, the band corresponding to non-cellular communication may be about 2.4 GHz or about 5 GHz band. The electronic device 101 may identify that the band corresponding to the first event is the first band based on identifying that the band corresponding to cellular communication is an N40 band, an N41 band, an N78 band, and/or an N79 band, and the specific frequency band corresponding to the first band is not limited to the above-described examples. In an embodiment, based on identifying that the band corresponding to cellular communication is not the first band associated with the band corresponding to non-cellular communication, the electronic device 101 may set the MIMO mode in operation 905. The electronic device 101 may set the operation mode of the Wi-Fi circuit 330 to the MIMO mode based on identifying that the band corresponding to cellular communication is not the first band.

In an embodiment, based on identifying that the band corresponding to cellular communication is the first band associated with the band corresponding to non-cellular communication, the electronic device 101 may identify the transmission power of the first RF signal in operation 907. In an embodiment, the electronic device 101 may identify the transmission power of the first RF signal based on identifying a strength of an RF signal received from a first network associated with cellular communication. For example, the electronic device 101 may identify the transmission power of the first RF signal based on identifying RSSI, RSRP, and/or RSRQ of the received RF signal. The electronic device 101 may identify whether a transmission signal associated with cellular communication has a relatively high risk of damage to the Wi-Fi circuit 330 by flowing into a non-cellular antenna (e.g., the first non-cellular antenna 421) disposed close to the first antenna, based on identifying the transmission power of the first RF signal.

In an embodiment, based on identifying the transmission power of the first RF signal, the electronic device 101 may identify whether the transmission power of the first RF signal is equal to or greater than a threshold in operation 909. In an embodiment, the threshold of the transmission power of the first RF signal may be set corresponding to a first parameter associated with cellular communication. For example, the first parameter may include information of at least one of a bandwidth of the cellular communication, a modulation scheme associated with the cellular communication, or a channel of the cellular communication. For example, the threshold of the first RF signal may be set within a range of about 14 to 17 dBm. In an embodiment, the electronic device 101 may identify a first parameter associated with the cellular communication based on identifying a message received from a first network associated with the cellular communication. The electronic device 101 may identify the threshold set corresponding to the first parameter.

In an embodiment, based on identifying that the transmission power of the first RF signal is less than the threshold, the electronic device 101 may set the MIMO mode in operation 905. The electronic device 101 may set the operation mode of the Wi-Fi circuit 330 to the MIMO mode based on identifying that the transmission power of the first RF signal is less than the threshold. The electronic device 101 may set the operation mode of the Wi-Fi circuit 330 to the MIMO mode based on identifying that the transmission power of an RF signal corresponding to cellular communication is relatively low.

In an embodiment, based on identifying that the transmission power of the first RF signal is equal to or greater than the threshold, the electronic device 101 may set the SISO mode in operation 911. The electronic device 101 may set the operation mode of the Wi-Fi circuit 330 such that the second RF signal is provided to the third antenna (e.g., the second non-cellular antenna 421) having a distance from the first antenna (e.g., the first cellular antenna 411) longer than the second antenna (e.g., the first non-cellular antenna 421), based on identifying that the transmission power of the first RF signal is equal to or greater than the threshold. The electronic device 101 may relatively reduce the risk of damage to a component (e.g., LNA) of the Wi-Fi FEM (e.g., the Wi-Fi FEM 333 of FIG. 3) that may occur due to the first RF signal flowing into the Wi-Fi circuit 330 through the second antenna, based on performing Wi-Fi communication through only the third antenna.

In an embodiment, the electronic device 101 may monitor a connection state of cellular communication after setting the operation mode of the Wi-Fi circuit 330. For example, the electronic device 101 may identify whether cellular communication associated with the first band is terminated based on setting the operation mode of the Wi-Fi circuit 330 to the SISO mode. In an embodiment, the electronic device 101 may switch the operation mode of the Wi-Fi circuit 330 to the MIMO mode based on identifying that the cellular communication associated with the first band is terminated. The electronic device 101 may switch the operation mode of the Wi-Fi circuit 330 to the MIMO mode based on identifying that the risk of damage to the Wi-Fi circuit 330 due to inflow of the first RF signal has decreased based on termination of the cellular communication associated with the first band. In an embodiment, the electronic device 101 may maintain the operation mode of the Wi-Fi circuit 330 in the SISO mode based on identifying that the cellular communication associated with the first band is being performed. The electronic device 101 may maintain the operation mode of the Wi-Fi circuit 330 in the SISO mode based on identifying that the risk of damage to the Wi-Fi circuit 330 due to inflow of the first RF signal is still relatively high.

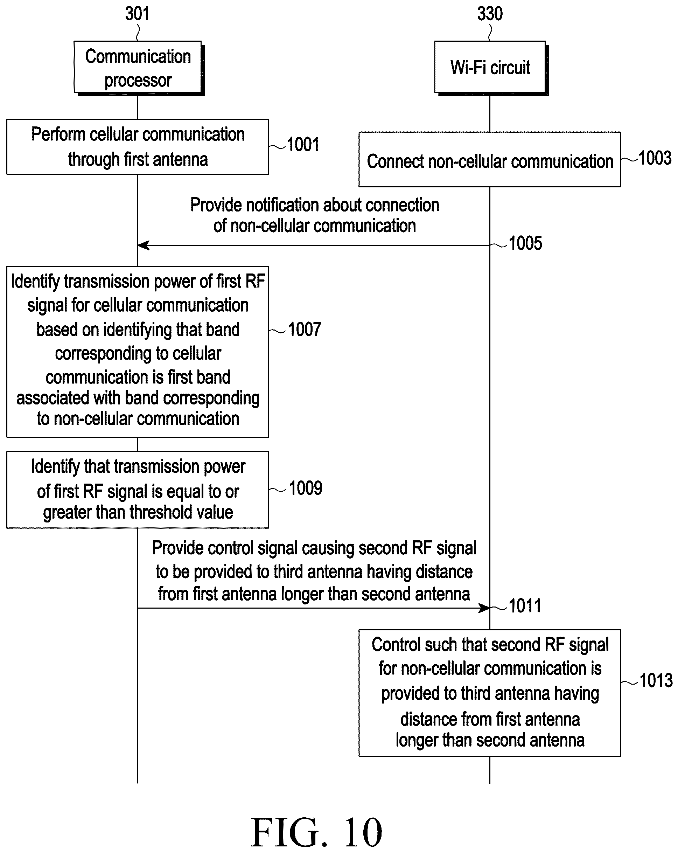

FIG. 10 illustrates a flowchart for describing an operation method of an electronic device according to an embodiment.

In the following embodiment, each operation may be performed sequentially, but is not necessarily performed sequentially. For example, the order of the operations may be changed, and at least two operations may be performed in parallel.

In an embodiment, the communication processor 301 may perform cellular communication through a first antenna (e.g., the first cellular antenna 411 and/or the second cellular antenna 413 of FIG. 4) in operation 1001.

In an embodiment, the Wi-Fi circuit 330 (or short-range communication circuit, short-range communication module, and/or the auxiliary processor 123) may connect non-cellular communication in operation 1003. For example, the Wi-Fi circuit 330 may connect Wi-Fi communication through a second antenna (e.g., the first non-cellular antenna 421 of FIG. 4) and/or a third antenna (e.g., the second non-cellular antenna 423 of FIG. 4).

In an embodiment, the Wi-Fi circuit 330 may provide a notification about connection of non-cellular communication to the communication processor 301 in operation 1005. For example, the Wi-Fi circuit 330 may transmit information associated with connection of Wi-Fi communication and a frequency band of the connected Wi-Fi communication to the communication processor 301 based on connecting Wi-Fi communication of about 2.4 GHz or about 5 GHz band.

In an embodiment, the communication processor 301 may identify transmission power of a first RF signal for cellular communication in operation 1007 based on identifying that a band corresponding to cellular communication is a first band associated with a band corresponding to non-cellular communication. For example, when Wi-Fi communication of about 5 GHz band is connected by the Wi-Fi circuit 330, the communication processor 301 may identify the transmission power corresponding to the cellular communication based on identifying that the band corresponding to cellular communication is an N78 band. For example, the communication processor 301 may identify the transmission power of the first RF signal based on identifying a strength of an RF signal received from a network.

In an embodiment, the communication processor 301 may identify that the transmission power of the first RF signal is equal to or greater than a threshold in operation 1009. The communication processor 301 may identify a first parameter including information of at least one of a bandwidth of cellular communication, a channel, or a modulation scheme based on a message received from the network. The communication processor 301 may compare the identified transmission power of the RF signal with the identified threshold based on identifying the threshold set corresponding to the first parameter.

In an embodiment, based on identifying that the transmission power of the identified RF signal is equal to or greater than the identified threshold, the communication processor 301 may provide a control signal causing the second RF signal to be provided to a third antenna (e.g., the second non-cellular antenna 423) having a distance from the first antenna (e.g., the first cellular antenna 411) longer than a second antenna (e.g., the first non-cellular antenna 421) in operation 1011.

In an embodiment, based on receiving the control signal from the communication processor 301, the Wi-Fi circuit 330 may control such that a second RF signal for non-cellular communication is provided to the third antenna having a distance from the first antenna longer than the second antenna in operation 1013.

In an embodiment, the electronic device 101 may relatively reduce the risk of damage to a short-range communication module (e.g., the Wi-Fi circuit 330) due to inflow of a cellular transmission signal based on performing non-cellular communication through a non-cellular antenna farther away from the cellular antenna.

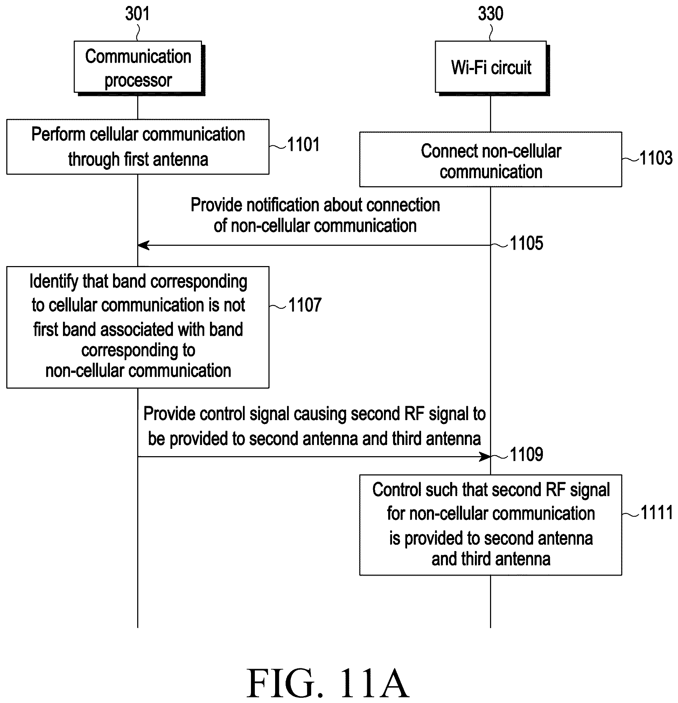

FIG. 11A is a flowchart illustrating a method of operating an electronic device according to an embodiment.

In the following embodiment, each operation may be performed sequentially, but is not necessarily performed sequentially. For example, the order of the operations may be changed, and at least two operations may be performed in parallel.

In an embodiment, the communication processor 301 may perform cellular communication through a first antenna (e.g., the first cellular antenna 411 and/or the second cellular antenna 413 of FIG. 4) in operation 1101.

In an embodiment, the Wi-Fi circuit 330 (or short-range communication circuit and/or the auxiliary processor 123) may connect non-cellular communication in operation 1103. For example, the Wi-Fi circuit 330 may connect Wi-Fi communication through a second antenna (e.g., the first non-cellular antenna 421 of FIG. 4) and/or a third antenna (e.g., the second non-cellular antenna 423 of FIG. 4).

In an embodiment, the Wi-Fi circuit 330 may provide a notification about connection of non-cellular communication to the communication processor 301 in operation 1105. For example, the Wi-Fi circuit 330 may transmit information associated with connection of Wi-Fi communication and a frequency band of the connected Wi-Fi communication to the communication processor 301 based on connecting Wi-Fi communication of about 2.4 GHz or about 5 GHz band.

In an embodiment, the communication processor 301 may identify that a band corresponding to cellular communication is not the first band associated with a band corresponding to non-cellular communication in operation 1107. For example, when Wi-Fi communication of about 5 GHz band is connected by the Wi-Fi circuit 330, the communication processor 301 may identify that the band corresponding to cellular communication is a band of about 3 GHz band.

In an embodiment, based on identifying that the band corresponding to cellular communication is not the first band, the communication processor 301 may provide a control signal causing the second RF signal to be provided to a second antenna (e.g., the first non-cellular antenna 421) and a third antenna (e.g., the second non-cellular antenna 423) to the Wi-Fi circuit 330 in operation 1109.

In an embodiment, based on receiving the control signal from the communication processor 301, the Wi-Fi circuit 330 may control such that a second RF signal for non-cellular communication is provided to the second antenna and the third antenna in operation 1111.

In an embodiment, the electronic device 101 may set the operation mode of a short-range communication module (e.g., the Wi-Fi circuit 330) to the MIMO mode based on identifying that a transmission signal corresponding to cellular communication may have a relatively small effect on the performance of Wi-Fi communication.

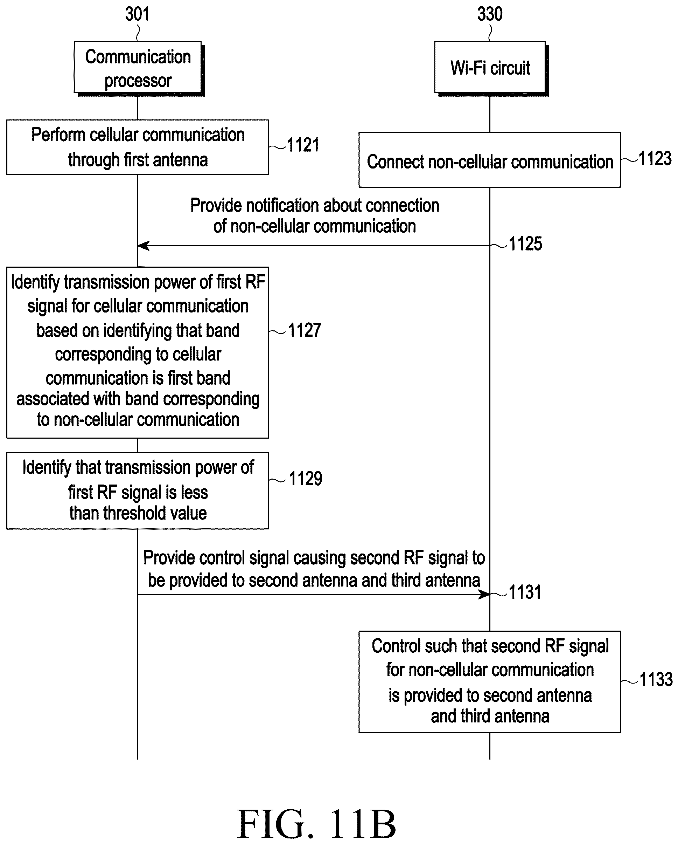

FIG. 11B is a flowchart illustrating an operation method of an electronic device according to an embodiment.

In the following embodiment, each operation may be performed sequentially, but is not necessarily performed sequentially. For example, the order of the operations may be changed, and at least two operations may be performed in parallel.

In an embodiment, the communication processor 301 may perform cellular communication through a first antenna (e.g., the first cellular antenna 411 and/or the second cellular antenna 413 of FIG. 4) in operation 1121.

In an embodiment, the Wi-Fi circuit 330 may connect non-cellular communication in operation 1123. For example, the Wi-Fi circuit 330 may connect Wi-Fi communication through a second antenna (e.g., the first non-cellular antenna 421 of FIG. 4) and/or a third antenna (e.g., the second non-cellular antenna 423 of FIG. 4).

In an embodiment, the Wi-Fi circuit 330 may provide a notification about connection of non-cellular communication to the communication processor 301 in operation 1125. For example, the Wi-Fi circuit 330 may transmit information associated with connection of Wi-Fi communication and a frequency band of the connected Wi-Fi communication to the communication processor 301 based on connecting Wi-Fi communication of about 2.4 GHz or about 5 GHz band.

In an embodiment, the communication processor 301 may identify transmission power of a first RF signal for cellular communication in operation 1127 based on identifying that a band corresponding to cellular communication is a first band associated with a band corresponding to non-cellular communication. For example, when Wi-Fi communication of about 5 GHz band is connected by the Wi-Fi circuit 330, the communication processor 301 may identify the transmission power corresponding to the cellular communication based on identifying that the band corresponding to cellular communication is an N78 band. For example, the communication processor 301 may identify the transmission power of the first RF signal based on identifying a strength of an RF signal received from a network.

In an embodiment, the communication processor 301 may identify that the transmission power of the first RF signal is less than a threshold in operation 1129. The communication processor 301 may identify a first parameter including information of at least one of a bandwidth of cellular communication, a channel, or a modulation scheme based on a message received from the network. The communication processor 301 may compare the identified transmission power of the RF signal with the identified threshold based on identifying the threshold set corresponding to the first parameter.

In an embodiment, based on identifying that the transmission power of the first RF signal is less than the threshold, the communication processor 301 may provide a control signal causing the second RF signal to be provided to a second antenna (e.g., the first non-cellular antenna 421) and a third antenna (e.g., the second non-cellular antenna 423) to the Wi-Fi circuit 330 in operation 1131.

In an embodiment, based on receiving the control signal from the communication processor 301, the Wi-Fi circuit 330 may control such that a second RF signal for non-cellular communication is provided to the second antenna and the third antenna in operation 1133.

In an embodiment, the electronic device 101 may set the operation mode of a short-range communication module (e.g., the Wi-Fi circuit 330) to the MIMO mode based on identifying that a transmission signal corresponding to cellular communication may have a relatively small effect on the performance of Wi-Fi communication.

According to an embodiment, an electronic device 101 may include at least one communication processor 301 and at least one short-range communication circuit 330. The at least one communication processor 301 may be configured to control a first RF signal for cellular communication to be provided to a first antenna included in a first antenna group. The at least one short-range communication circuit 330 may be configured to control a second RF signal for non-cellular communication to be provided to at least one antenna out of a second antenna or a third antenna included in a second antenna group. The at least one communication processor 301 may be configured to identify a first event associated with cellular communication while the non-cellular communication is performed through the second antenna and the third antenna based on a MIMO mode. The at least one communication processor 301 may be configured to identify transmission power of the first RF signal based on identifying that a band corresponding to the first event is a first band associated with a band corresponding to the non-cellular communication. The at least one communication processor 301 may be configured to switch an operation mode of the at least one short-range communication circuit 330 to a SISO mode by controlling the at least one short-range communication circuit 330 such that the second RF signal is provided to the third antenna having a distance from the first antenna longer than the second antenna, based on identifying that the transmission power of the first RF signal is equal to or greater than a threshold.

In an embodiment, the at least one communication processor 301 may be further configured to maintain the operation mode of the at least one short-range communication circuit 330 in the MIMO mode based on identifying that the band corresponding to the first event is not the first band.

In an embodiment, the at least one communication processor 301 may be further configured to maintain the operation mode of the at least one short-range communication circuit 330 in the MIMO mode based on identifying that the transmission power of the first RF signal is less than the threshold.

In an embodiment, the at least one communication processor 301 may be configured to identify whether a voice call service associated with the cellular communication is terminated based on switching the operation mode of the at least one short-range communication circuit 330 to the SISO mode. The at least one communication processor 301 may be further configured to switch the operation mode of the at least one short-range communication circuit 330 to the MIMO mode based on identifying that the voice call service is terminated.

In an embodiment, the at least one communication processor 301 may be further configured to maintain the operation mode of the at least one short-range communication circuit 330 in the SISO mode based on identifying that the voice call service is being performed.

In an embodiment, as at least part of identifying the transmission power of the first RF signal based on identifying that the band corresponding to the first event is the first band associated with the band corresponding to the non-cellular communication, the at least one communication processor 301 may be configured to identify the transmission power of the first RF signal based on identifying a strength of an RF signal received from a first network associated with the cellular communication.

In an embodiment, the at least one communication processor 301 may be configured to identify a first parameter associated with the cellular communication based on identifying a message received from a first network associated with the cellular communication. The at least one communication processor 301 may be further configured to identify the threshold of the first RF signal set corresponding to the first parameter.

In an embodiment, the first parameter may include information of at least one of a bandwidth of the cellular communication, a modulation scheme associated with the cellular communication, or a channel of the cellular communication.

According to an embodiment, an electronic device 101 may include at least one communication processor 301 and at least one short-range communication circuit 330. The at least one communication processor 301 may be configured to control a first RF signal for cellular communication to be provided to a first antenna included in a first antenna group. The at least one short-range communication circuit 330 may be configured to control a second RF signal for non-cellular communication to be provided to at least one antenna out of a second antenna or a third antenna included in a second antenna group. The at least one communication processor 301 may be configured to identify a second event associated with non-cellular communication while performing the cellular communication through the first antenna. The at least one communication processor 301 may be configured to identify transmission power of the first RF signal based on identifying that a band corresponding to the cellular communication is a first band associated with a band corresponding to the non-cellular communication. The at least one communication processor 301 may be configured to set an operation mode of the at least one short-range communication circuit 330 to a SISO mode by controlling the at least one short-range communication circuit 330 such that the second RF signal is provided to the third antenna having a distance from the first antenna longer than the second antenna, based on identifying that the transmission power of the first RF signal is equal to or greater than a threshold.

In an embodiment, the at least one communication processor 301 may be further configured to set the operation mode of the at least one short-range communication circuit 330 to a MIMO mode by controlling the at least one short-range communication circuit 330 such that the second RF signal is provided to the third antenna having the distance from the first antenna longer than the second antenna, based on identifying that the transmission power of the first RF signal is less than the threshold.

According to an embodiment, a method of operating an electronic device 101 may include an operation of identifying a first event associated with cellular communication through a first antenna included in a first antenna group while the non-cellular communication is performed through a second antenna and a third antenna included in a second antenna group based on a MIMO mode. The method of operating the electronic device 101 may include an operation of identifying transmission power of a first RF signal for cellular communication based on identifying that a band corresponding to the first event is a first band associated with a band corresponding to the non-cellular communication. The method of operating the electronic device 101 may include an operation of switching an operation mode of at least one short-range communication circuit 330 of the electronic device to a SISO mode by controlling the at least one short-range communication circuit 330 such that a second RF signal for the non-cellular communication is provided to the third antenna having a distance from the first antenna longer than the second antenna, based on identifying that the transmission power of the first RF signal is equal to or greater than a threshold.

In an embodiment, the method of operating the electronic device 101 may further include an operation of maintaining the operation mode of the at least one short-range communication circuit 330 in the MIMO mode based on identifying that the band corresponding to the first event is not the first band.

In an embodiment, the method of operating the electronic device 101 may further include an operation of maintaining the operation mode of the at least one short-range communication circuit 330 in the MIMO mode based on identifying that the transmission power of the first RF signal is less than the threshold.

In an embodiment, the method of operating the electronic device 101 may further include an operation of identifying whether a voice call service associated with the cellular communication is terminated based on switching the operation mode of the at least one short-range communication circuit 330 to the SISO mode. The method of operating the electronic device 101 may further include an operation of switching the operation mode of the at least one short-range communication circuit 330 to the MIMO mode based on identifying that the voice call service is terminated.

In an embodiment, the method of operating the electronic device 101 may further include an operation of maintaining the operation mode of the at least one short-range communication circuit 330 in the SISO mode based on identifying that the voice call service is being performed.

In an embodiment, in the method of operating the electronic device 101, the operation of identifying the transmission power of the first RF signal based on identifying that the band corresponding to the first event is the first band associated with the band corresponding to the non-cellular communication may include an operation of identifying the transmission power of the first RF signal based on identifying a strength of an RF signal received from a first network associated with the cellular communication.

In an embodiment, the method of operating the electronic device 101 may further include an operation of identifying a first parameter associated with the cellular communication based on identifying a message received from a first network associated with the cellular communication. The method of operating the electronic device 101 may further include an operation of identifying the threshold of the first RF signal set corresponding to the first parameter.

In an embodiment, the first parameter may include information of at least one of a bandwidth of the cellular communication, a modulation scheme associated with the cellular communication, or a channel of the cellular communication.

According to an embodiment, a method of operating an electronic device 101 may include an operation of identifying a second event associated with non-cellular communication while performing cellular communication through a first antenna included in a first antenna group. The method of operating the electronic device 101 may include an operation of identifying transmission power of a first RF signal for cellular communication based on identifying that a band corresponding to the cellular communication is a first band associated with a band corresponding to the non-cellular communication. The method of operating the electronic device 101 may include an operation of setting an operation mode of at least one short-range communication circuit 330 of the electronic device 101 to a SISO mode by controlling the at least one short-range communication circuit 330 such that a second RF signal for the non-cellular communication is provided to the third antenna having a distance from the first antenna longer than the second antenna, based on identifying that the transmission power of the first RF signal is equal to or greater than a threshold.

In an embodiment, the method of operating the electronic device 101 may further include an operation of setting the operation mode of the at least one short-range communication circuit 330 to a MIMO mode by controlling the at least one short-range communication circuit 330 such that the second RF signal is provided to the third antenna having the distance from the first antenna longer than the second antenna, based on identifying that the transmission power of the first RF signal is less than the threshold.

The electronic device according to an embodiment may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment of the disclosure may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
at least one communication processor (301); and
at least one short-range communication circuit (330),
wherein the at least one communication processor (301) is configured to control a first RF signal for cellular communication to be provided to a first antenna included in a first antenna group,
wherein the at least one short-range communication circuit (330) is configured to control a second RF signal for non-cellular communication to be provided to at least one antenna out of a second antenna or a third antenna included in a second antenna group,
wherein the at least one communication processor (301) is configured to:
identify a first event associated with cellular communication while the non-cellular communication is performed through the second antenna and the third antenna based on a MIMO mode;
identify transmission power of the first RF signal based on identifying that a band corresponding to the first event is a first band associated with a band corresponding to the non-cellular communication; and
switch an operation mode of the at least one short-range communication circuit (330) to a SISO mode by controlling the at least one short-range communication circuit (330) such that the second RF signal is provided to the third antenna having a distance from the first antenna longer than the second antenna, based on identifying that the transmission power of the first RF signal is equal to or greater than a threshold.

2. The electronic device (101) of claim 1, wherein the at least one communication processor (301) is further configured to maintain the operation mode of the at least one short-range communication circuit (330) in the MIMO mode based on identifying that the band corresponding to the first event is not the first band.

3. The electronic device (101) of claim 1 or 2, wherein the at least one communication processor (301) is further configured to maintain the operation mode of the at least one short-range communication circuit (330) in the MIMO mode based on identifying that the transmission power of the first RF signal is less than the threshold.

4. The electronic device (101) of any one of claims 1 to 3, wherein the at least one communication processor (301) is further configured to:
identify whether a voice call service associated with the cellular communication is terminated based on switching the operation mode of the at least one short-range communication circuit (330) to the SISO mode; and
switch the operation mode of the at least one short-range communication circuit (330) to the MIMO mode based on identifying that the voice call service is terminated.

5. The electronic device (101) of any one of claims 1 to 4, wherein the at least one communication processor (301) is further configured to maintain the operation mode of the at least one short-range communication circuit (330) in the SISO mode based on identifying that the voice call service is being performed.

6. The electronic device (101) of any one of claims 1 to 5, wherein, as at least part of identifying the transmission power of the first RF signal based on identifying that the band corresponding to the first event is the first band associated with the band corresponding to the non-cellular communication, the at least one communication processor (301) is configured to identify the transmission power of the first RF signal based on identifying a strength of an RF signal received from a first network associated with the cellular communication.

7. The electronic device (101) of any one of claims 1 to 6, wherein the at least one communication processor (301) is further configured to:
identify a first parameter associated with the cellular communication based on identifying a message received from a first network associated with the cellular communication; and
identify the threshold of the first RF signal set corresponding to the first parameter.

8. The electronic device (101) of any one of claims 1 to 7, wherein the first parameter includes information of at least one of a bandwidth of the cellular communication, a modulation scheme associated with the cellular communication, or a channel of the cellular communication.

9. An electronic device (101) comprising:
at least one communication processor (301); and
at least one short-range communication circuit (330), wherein the at least one communication processor (301) is configured to control a first RF signal for cellular communication to be provided to a first antenna included in a first antenna group, wherein the at least one short-range communication circuit (330) is configured to control a second RF signal for non-cellular communication to be provided to at least one antenna out of a second antenna or a third antenna included in a second antenna group, and wherein the at least one communication processor (301) is configured to:
identify a second event associated with non-cellular communication while performing the cellular communication through the first antenna;
identify transmission power of the first RF signal based on identifying that a band corresponding to the cellular communication is a first band associated with a band corresponding to the non-cellular communication; and
set an operation mode of the at least one short-range communication circuit (330) to a SISO mode by controlling the at least one short-range communication circuit (330) such that the second RF signal is provided to the third antenna having a distance from the first antenna longer than the second antenna, based on identifying that the transmission power of the first RF signal is equal to or greater than a threshold.

10. The electronic device (101) of claim 9, wherein the at least one communication processor (301) is further configured to set the operation mode of the at least one short-range communication circuit (330) to a MIMO mode by controlling the at least one short-range communication circuit (330) such that the second RF signal is provided to the third antenna having the distance from the first antenna longer than the second antenna, based on identifying that the transmission power of the first RF signal is less than the threshold.

11. A method of operating an electronic device (101), the method comprising:
identifying a first event associated with cellular communication through a first antenna included in a first antenna group while the non-cellular communication is performed through a second antenna and a third antenna included in a second antenna group based on a MIMO mode;
identifying transmission power of a first RF signal for cellular communication based on identifying that a band corresponding to the first event is a first band associated with a band corresponding to the non-cellular communication; and
switching an operation mode of at least one short-range communication circuit (330) of the electronic device to a SISO mode by controlling the at least one short-range communication circuit (330) such that a second RF signal for the non-cellular communication is provided to the third antenna having a distance from the first antenna longer than the second antenna, based on identifying that the transmission power of the first RF signal is equal to or greater than a threshold.

12. The method of claim 11, further comprising maintaining the operation mode of the at least one short-range communication circuit (330) in the MIMO mode based on identifying that the band corresponding to the first event is not the first band.

13. The method of claim 11 or 12, further comprising maintaining the operation mode of the at least one short-range communication circuit (330) in the MIMO mode based on identifying that the transmission power of the first RF signal is less than the threshold.

14. The method of any one of claims 11 to 13, further comprising:
identifying whether a voice call service associated with the cellular communication is terminated based on switching the operation mode of the at least one short-range communication circuit (330) to the SISO mode; and
switching the operation mode of the at least one short-range communication circuit (330) to the MIMO mode based on identifying that the voice call service is terminated.

15. The method of any one of claims 11 to 14, further comprising maintaining the operation mode of the at least one short-range communication circuit (330) in the SISO mode based on identifying that the voice call service is being performed.
